(19) Europäisches Patentamt

European Patent Office

Office européen des brevets

(11) **EP 0 883 278 B1**

(12) **EUROPEAN PATENT SPECIFICATION**

(45) Date of publication and mention
of the grant of the patent:
**08.09.2004 Bulletin 2004/37**

(51) Int Cl.⁷: **H04N 1/047**

(21) Application number: **98304388.6**

(22) Date of filing: **03.06.1998**

(54) **Position compensating method during two-way printing and scanning**

Positionskompensationsverfahren beim Zweirichtungsdruck und -Abtasten

Procédé de compensation de position pendant impression et balayage aller-retour

(84) Designated Contracting States:
**DE FR GB IT**

(30) Priority: **03.06.1997 KR 9722804**

(43) Date of publication of application:
**09.12.1998 Bulletin 1998/50**

(73) Proprietor: **Samsung Electronics Co., Ltd.**
**Suwon-city, Kyungki-do (KR)**

(72) Inventor: **Lee, Myoung-Sool**
**Ansan-si, Kyungki-do (KR)**

(74) Representative: **Boakes, Jason Carrington**
**Harrison Goddard Foote**
**31 St Saviourgate**
**York YO1 8NQ (GB)**

(56) References cited:
**EP-A- 0 274 383**          **EP-A- 0 497 440**
**EP-A- 0 735 738**          **EP-A- 0 881 819**
**FR-A- 2 390 866**          **NL-A- 8 603 173**

## Description

The present invention relates to a position compensating method during two-way printing and scanning. More particularly, it relates to a position compensating method for a multi-tasking system having for example an ink-jet print head and a shuttle scanner.

Multimedia systems, combinations of moving and still pictures, sound, music and words, especially in computers or entertainment are pervasive in the industrialised world. In line with the development of a multimedia computer system, printers, being one kind of peripheral device, have become multi-functional.

A multi-tasking system having printing and scanning functions will now be described referring to the attached drawings. The multi-tasking system having printing and scanning functions receives/outputs data and/or control signals from/to an external system through an interface 21. Data to be printed is transmitted from personal computer 10 to a central processing unit (CPU) 23 through interface 21. CPU 23 that receives the data to be printed reads out a necessary control program and data through a memory 22, and produces a control signal to a print driver 24. Print driver 24 controls the printing mechanism in response to an applied control signal, thus performing printing.

A shuttle scanner is used to scan the document on which the information is recorded. When the information of the document is scanned through the shuttle scanner, an image processor 26 compensates scanned image data and stores it in image memory 28. The image data, stored in image memory 28, is transmitted to a personal computer (PC) 10 through interface 21 under the control of CPU 23. PC 10, receiving the image data via interface 21, processes the image data and stores it as a database. In order to print the scanned data, data to be printed is produced again to a multi-tasking system 20. Multi-tasking system 20 generates a control signal to CPU 23, and image data is printed out on a print media through print driver 24 and print mechanism 25.

The conventional multi-tasking system prints a certain printer pattern in order to measure a print compensating value during two-way printing so that a user can examine the printing state with the naked eye. The multi-tasking system employs different methods of measuring a print compensating value by sets and the print compensating value varies with the time.

In a multi-tasking system employing an ink-jet print head, the print compensating value varies with the amount of ink used, and the user has to change the print compensating value frequently. A print compensating value should be changed for each set of the multi-tasking system in the manufacturing process.

EP 0274383 describes a method for correcting alignment errors in a scanner in which the output from the scanner is stored in a line memory and selectively read from the memory in accordance with predetermined correction factors.

It is an aim of embodiments of the present invention to at least partly mitigate the above-mentioned problems, as described in claims 1 to 9.

According to a first aspect of the present invention there is provided a method of compensating for errors in scanned data comprising:

> scanning a printed pattern and calculating from the scanned data an error factor to be applied to subsequently scanned image data to compensate for a position error of the scanned image data, characterised in that the method further comprises:

> > printing the pattern on a record sheet using a printer head which moves in a first direction, scanning the printed pattern, using a bi-directional scanner, in the first direction and in a second direction opposite to said first direction, and

> > calculating the error compensation factor from the bi-directionally scanned data, to compensate for a bi-directional position error of the scanned image.

The printer head may be an ink-jet print head and may be a bi-directional printer head adapted for the bi-directional printing operations. Preferably, the pattern is printed in such a bi-directional printing operation.

The bi-directional printing operation may comprise:

> printing a first part of the pattern moving the printer head in the first direction;
> advancing the record sheet; and
> printing a second part of the pattern moving the printer head in the opposite direction.

Preferably, the direction in which the record sheet is advanced is substantially normal to the first and opposite directions.

The method may comprise:

> printing the first part of the pattern;
> bi-directionally scanning the first part of the printed pattern from the record sheet;
> advancing the record sheet;
> printing the second part of the pattern;
> bi-directionally scanning the second part of the printed pattern from the record sheet; and
> calculating from the bi-directionally scanned data a number of error compensation factors to be applied to subsequently scanned image data to compensate for a bi-directional position error of the scanned image data.

Preferably, the pattern is one or more vertical lines.

According to a second aspect of the present invention there is provided an apparatus comprising: a scanner; and

a control means for causing the scanner to scan a printed pattern and for calculating from the scanned data an error compensating factor to be applied to subsequently scanned image data to compensate for a position error of the scanned image data; characterised in that

the apparatus further comprises:

a printer head wherein said printer head and said control means are operative to cause the printer head to print said pattern on a record sheet moving in a first direction, to cause the scanner to scan the printed pattern bi-directionally by moving in the first direction and in a second direction opposite to said first direction and to calculate the error compensation factor from the bi-directionally scanned data, to compensate for a bi-directional position error of the scanned image.

The present invention will now be described by way of example with reference to the accompanying drawings in which:

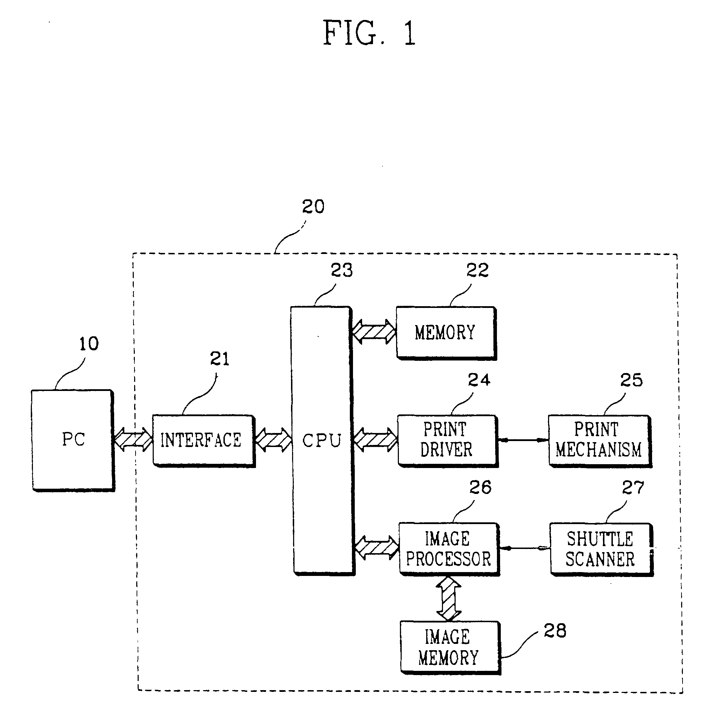

FIG.1 is a block diagram of an internal circuit for an ink-jet printer with a conventional shuttle scanner;

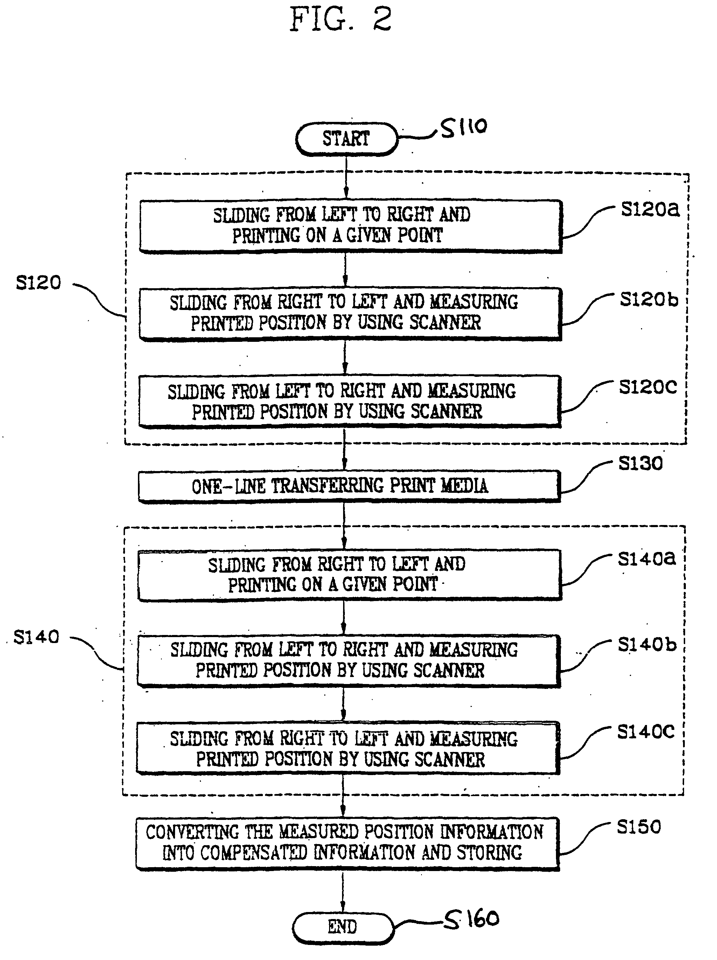

FIG.2 is a control sequence of a position compensating method during two-way printing and scanning in accordance with the present invention; and

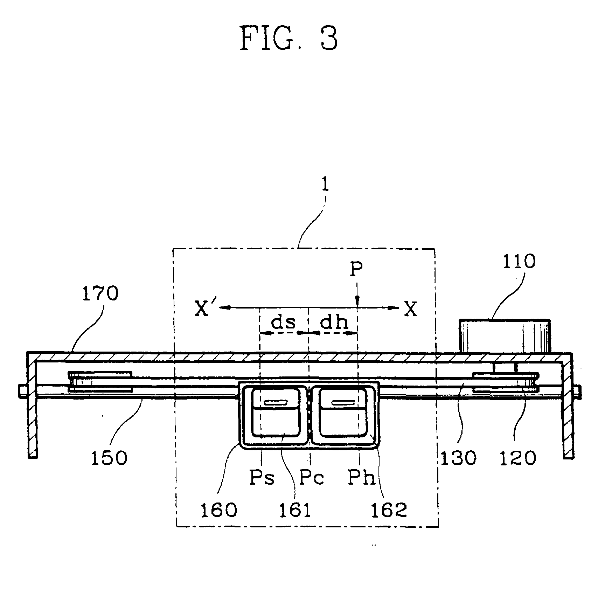

FIG.3 depicts an ink-jet printer mechanism having a shuttle scanner in accordance with the present invention.

As shown in the drawings, the position compensating method includes an initialising step S110 for compensating a print position; a first step S120 of sliding ink-jet printer head 161 from left X' to right X once it is ready to compensate a print position in S110, printing a given point P, scanning in two directions, and then measuring a printed position; a second step S130 of one-line transferring a print media 1 for printing in an opposite direction once the first step S120 is completed; a third step S140 of measuring a print position, sliding ink-jet print head 161 from a right X to left X' if the second step S130 is completed, scanning a given point in both directions, and then measuring the printed way printing and scanning is more fully described as follows.

Once data to be printed is transmitted to the multi-tasking system from a personal computer (not shown), a control signal according to the print operation is generated in order to process the data to be printed as follows.

In the first place CR motor 110 that controls the rotation according to the control signal, transmits the rotating force to belt 130 through a pulley 120. Ink-jet print head 161 is slid along the width of the print media by the force transmitted to belt 130. Ink-jet print head 161 is moved under the guidance of a guide shaft 150. Ink-jet print head 161 sprays the ink onto print media 1 in response to the control signal.

Once a user places the document on the multi-tasking system for scanning, the document is scanned by shuttle scanner 162. Shuttle scanner 162 which scans the information recorded on the document is mounted on one side of ink-jet print head 161, and moves along with ink-jet print head 161 along guide shaft 150 by the rotating force of CR motor 110. The scanned image data is stored by the use of the PC10 as a database, or processed in PC10 according to an application program.

There is a difference between an actual print position during printing and a print position computed in the application software because of the printer mechanism's inertia or backlash and the time it takes for the ink or dot wire from the ink-jet print head to reach print media 1.

The difference becomes double during the two-way printing or two-way scanning, and the value used to assure the best possible print quality and the scanning quality is compensated by software.

For such a compensation, ink-jet print head 161- of first step S120 is slid from X' to right X, and performs a step S120a for the print operation on a given point P of print media 1.

Once printing is performed in a constant pattern on given point P of print media 1, scanner 162 is slid from right X to left X' to scan the printed position on print media 1 (S120b). A value of the scanned point equals "$Y_{r1}$". If "$Y_{r1}$" is computed, scanner 162 is slid from left X' to right X, through scanning and performs step (S120c) that measures printed position.

8

If "$Y_{r1}$" is computed after changing the printing direction, print media 1 is one-line transferred (S130) for printing in the opposite direction. If one line of print media 1 is transferred (S130), third step S140 and step S140a are performed so that ink-jet print head 161 is slid from right X to left X', thereby printing on print media 1 that has been one-line transferred.

Once printing on one-line transferred print media 1, scanner 162 is slid from right X to left X', to measure the printed position (S140b) through scanning. The value of the printed position is "$Y_{r1}$". Once the value of the printed position "$Y_{r1}$" is computed, scanner 162 is slid from left X' to right X to perform step 140c, thus measuring the printed position by scanning in the opposite direction. This scanning position is "$Y_{r11}$". When each value of the printed position "$Y_{r1}$", "$Y_{rr}$", "$Y_{r1}$", "$Y_{r11}$" is produced through the above step, it is converted into print position compensating information (S150), thus processing the print position compensating information.

The following reference letters denote the following reference things:

Em - Error made by print mechanism

Eh - Error by ink-jet print head

Es - Error by photo-accumulating time

Em + Eh Position error between print position in software and actually printed position Em + Es - Error between actually printed position and position of scanned data. Once setting such an error value, the position error equals 2 * (Em + Eh) during two-way printing, and the position error equals 2 * (Em + Es) during two-way scanning. Accordingly, the two-way print position compensation is expressed as follows:

$$|Y_{rr} - Y_{r1}|/2 \text{ or } |Y_{rr} - Y_{11}|/2 = Em + Es \qquad 1$$

$$Y_r = (Y_{rr} - Y_{r1})/2 \qquad 2$$

$$Y_1 = (Y_{1r} + Y_{11})/2 \qquad 3$$

$$|Y_r - Y_1|/2 = Em + Eh \qquad 4$$

The information of two-way printing position compensation is output according to equations 1 to 4. A difference between the middle position of two-way print position on print media 1 and position computed by software corresponds to a distance between ink-jet print head 161 and scanner 152, so

$$|Y_r - Y_1|/2 - X = dh + ds \qquad 5$$

the information of scanner's position error compensation is output through equation 5. At this point, "dh" is a distance Ph between carrier 160's position PC and ink-jet print head 161 mounted on carrier 160, and "ds" is a distance Ps between position Pc of carrier 160 of the multi-tasking system and scanner 162's. Once two-way printing and scanning position compensation information are computed through this step, outputting the position information is completed through step S160. Once the position compensation information is output, it is stored in the memory (not shown) of the multi-tasking system. Thus, as two-way printing operation and scanning operation are completed, the measured data is converted into position compensation information to be utilised during the two-way printing operation and scanning operation. As described above, the present invention automatically measures and compensates the position error whenever the printing function of the multi-tasking system is used, so that the user may use the printing function more conveniently, and the number of the manufacturing steps for controlling the print position is decreased, thus enhancing the manufacturing efficiency.

**Claims**

1. A method of compensating for errors in scanned image data comprising:

   scanning a printed pattern and calculating from the scanned data of said printed pattern an error factor to be applied to subsequently scanned image data to compensate for a position error of the scanned image data, **characterised**

   **in that** the method further comprises:

   printing the pattern on a record sheet using a printer head which moves in a first direction, scanning the printed pattern, using a bi-directional scanner, in the first direction and in a second direction opposite to said first direction, and calculating the error compensation factor from the bi-directionally scanned data of said printed pattern, to compensate for a bi-directional position error of the scanned image.

2. A method according to claim 1 in which the printer head is an ink-jet printer head.

3. A method according to claim 1 or claim 2 in which the printer head is a bi-directional printer head adapted for bi-directional printing operations.

4. A method according to claim 3 in which the pattern is printed in such a bi-directional printing operation.

5. A method according to claim 4 in which the bi-directional printing operation comprises:

   printing a first part of the pattern moving the printer head in the first direction; advancing the record sheet; and printing a second part of the pattern moving the printer head in the second direction.

6. A method according to claim 5 in which the direction in which the record sheet is advanced is substantially normal to the first and second directions.

7. A method according to claim 5 comprising;

   printing the first part of the pattern; bi-directionally scanning the first part of the printed pattern from the record sheet;

advancing the record sheet;

printing the second part of the pattern;

bi-directionally scanning the second part of the printed pattern from the record sheet; and

calculating from the bi-directionally scanned data a number of error compensation factors to be applied to subsequently scanned image data to compensate for a bi-directional position error of the scanned image data.

8. A method according to any preceding claim in which the pattern is one or more vertical lines.

9. An apparatus comprising: a scanner (162); and

a control means for causing the scanner to scan a printed pattern and for calculating from the scanned data of said printed pattern an error compensating factor to be applied to subsequently scanned image data to compensate for a position error of the scanned image data; **characterised in that**

the apparatus further comprises:

a printer head (161) wherein said printer head and said control means are operative to cause the printer head to print said pattern on a record sheet moving in a first direction, to cause the scanner to scan the printed pattern bi-directionally by moving in the first direction and in a second direction opposite to said first direction and to calculate the error compensation factor from the bi-directionally scanned data of said printed pattern, to compensate for a bi-directional position error of the scanned image.

**Patentansprüche**

1. Verfahren zum Kompensieren von Fehlern in gescannten Bilddaten, umfassend die folgenden Schritte:

Scannen eines gedruckten Musters und Berechnen eines Fehlerfaktors, der auf nachfolgend gescannte Bilddaten angewandt werden soll, anhand der gescannten Daten des genannten gedruckten Musters, um einen Positionsfehler der gescannten Bilddaten zu kompensieren, **dadurch gekennzeichnet, dass** das Verfahren ferner die folgenden Schritte umfasst:

Ausdrucken des Musters auf einem Aufreichnungsblatt mit einem Druckkopf, der sich in einer ersten Richtung bewegt, Scannen des gedruckten Musters mit einem bidirektionalen Scanner in der ersten Richtung und in einer zweiten, der genannten ersten Richtung entgegengesetzten Richtung, und

Berechnen des Fehlerkompensationsfaktors anhand der bidirektional gescannten Daten des genannten gedruckten Musters, um einen bidirektionalen Positionsfehler des gescannten Bildes zu kompensieren.

2. Verfahren nach Anspruch 1, bei dem der Druckkopf ein Tintenstrahldruckkopf ist.

3. Verfahren nach Anspruch 1 oder Anspruch 2, bei dem der Druckkopf ein bidirektionaler Druckkopf ist, der für bidirektionale Druckvorgänge adaptiert ist.

4. Verfahren nach Anspruch 3, bei dem das Muster in einem solchen bidirektionalen Druckvorgang ausgedruckt wird.

5. Verfahren nach Anspruch 4, bei dem der bidirektionale Druckvorgang Folgendes umfasst:

Ausdrucken eines ersten Teils des Musters, wobei sich der Druckkopf in der ersten Richtung bewegt;
Vorbewegen des Aufzeichnungsblattes; und
Ausdrucken eines zweiten Teils des Musters, wobei sich der Druckkopf in der zweiten Richtung bewegt.

6. Verfahren nach Anspruch 5, bei dem die Richtung, in der das Aufzeichnungsblatt vorbewegt wird, im Wesentlichen normal zu der ersten und der zweiten Richtung ist.

7. Verfahren nach Anspruch 5, umfassend die folgenden Schritte:

Ausdrucken des ersten Teils des Musters;
bidirektionales Scannen des ersten Teils des gedruckten Musters von dem Aufzeichnungsblatt;
Vorbewegen des Aufzeichnungsblattes;
Ausdrucken des zweiten Teils des Musters;
bidirektionales Scannen des zweiten Teils des gedruckten Musters von dem Aufzeichnungsblatt; und
Berechnen einer Anzahl von Fehlerkorrekturfaktoren, die auf nachfolgend gescannte Bilddaten angewandt werden, anhand der bidirektional gescannten Daten, um einen bidirektionalen Positionsfehler der gescannten Bilddaten zu kompensieren.

8. Verfahren nach einem der vorherigen Ansprüche, bei dem das Muster eine oder mehrere vertikale Linien ist.

**9.** Vorrichtung, die Folgendes umfasst:

einen Scanner (162); und
ein Steuermittel, um den Scanner zu veranlassen, ein gedrucktes Muster zu scannen und anhand der gescannten Daten des genannten gedruckten Musters einen Fehlerkompensationsfaktor zu berechnen, der auf die nachfolgend gescannten Bilddaten angewandt wird, um einen Positionsfehler der gescannten Bilddaten zu kompensieren; **dadurch gekennzeichnet, dass** die Vorrichtung ferner Folgendes umfasst:

einen Druckkopf (161), wobei der genannte Druckkopf und das genannte Steuermittel die Aufgabe haben zu veranlassen, dass der Druckkopf das genannte Muster auf einem Aufzeichnungsblatt in einer Bewegung in einer ersten Richtung ausdruckt, dass der Scanner das gedruckte Muster bidirektional durch Bewegen in der ersten Richtung und in einer zweiten, der genannten ersten Richtung entgegengesetzten Richtung scannt und den Fehlerkompensationsfaktor anhand der bidirektional gescannten Daten des genannten gedruckten Musters berechnet, um einen bidirektionalen Positionsfehler des gescannten Bildes zu kompensieren.

## Revendications

**1.** Méthode de compensation des erreurs dans les données images balayées par scanner comprenant :

le balayage par scanner d'un motif imprimé et le calcul à partir des données balayées dudit motif imprimé d'un facteur d'erreur à appliquer aux données images balayées ultérieurement par scanner afin de compenser une erreur de position des données images balayées par scanner, **caractérisée en ce que** cette méthode comprend également :

l'impression du motif sur une feuille d'enregistrement en utilisant une tête d'impression qui se déplace dans une première direction,
le balayage par scanner du motif imprimé, en utilisant un scanner bidirectionnel, dans la première direction et dans une deuxième direction opposée à ladite première direction,
et
le calcul du facteur de compensation d'erreur à partir des données dudit motif imprimé balayées par scanner de manière bidirectionnelle, afin de compenser une erreur de position bidirectionnelle de l'image balayée par scanner.

**2.** Méthode selon la revendication 1 dans laquelle la tête d'impression est une tête d'impression à jet d'encre.

**3.** Méthode selon la revendication 1 ou la revendication 2 dans laquelle la tête d'impression est une tête d'impression bidirectionnelle adaptée à des opérations d'impression bidirectionnelles.

**4.** Méthode selon la revendication 3 dans laquelle le motif est imprimé dans une telle opération d'impression bidirectionnelle.

**5.** Méthode selon la revendication 4 dans laquelle l'opération d'impression bidirectionnelle comprend :

l'impression d'une première partie du motif en déplaçant la tête d'impression dans la première direction ;
l'avancement de la feuille d'enregistrement ; et
l'impression d'une deuxième partie du motif en déplaçant la tête d'impression dans la deuxième direction.

**6.** Méthode selon la revendication 5 dans laquelle la direction dans laquelle la feuille d'enregistrement est avancée est essentiellement perpendiculaire à la première et à la deuxième direction.

**7.** Méthode selon la revendication 5 comprenant :

l'impression de la première partie du motif ;
le balayage par scanner, de manière bidirectionnelle, de la première partie du motif imprimé à partir de la feuille d'enregistrement ;
l'avancement de la feuille d'enregistrement ;
l'impression de la deuxième partie du motif ;
le balayage par scanner, de manière bidirectionnelle, de la deuxième partie du motif imprimé à partir de la feuille d'enregistrement ; et
le calcul à partir des données balayées par scanner de manière bidirectionnelle d'un certain nombre de facteurs de compensation d'erreur à appliquer aux données images balayées ultérieurement par scanner afin de compenser une erreur de position bidirectionnelle des données images balayées par scanner.

**8.** Méthode selon l'une quelconque des revendications précédentes dans laquelle le motif est une ou plusieurs lignes verticales.

**9.** Appareil comprenant : un scanner (162) ; et

un moyen de commande pour faire balayer par le scanner un motif imprimé et pour calculer, à partir des données dudit motif imprimé balayées par scanner, un facteur de compensation d'erreur à appliquer aux données images balayées ultérieurement par scanner afin de compenser u&ne erreur de position des données images balayées par scanner ; **caractérisé en ce que**

cet appareil comprend également :

une tête d'impression (161) dans laquelle ladite tête d'impression et ledit moyen de commande fonctionnent de façon à faire imprimer ledit motif par la tête d'impression sur une feuille d'enregistrement en se déplaçant dans une première direction, à faire balayer le motif imprimé par le scanner de manière bidirectionnelle en se déplaçant dans la première direction et dans une deuxième direction opposée à ladite première direction et à calculer le facteur de compensation d'erreur à partir des données dudit motif imprimé balayées par scanner de manière bidirectionnelle afin de compenser une erreur de position bidirectionnelle de l'image balayée par scanner.

# FIG. 1

# FIG. 2

START — S110

S120
- SLIDING FROM LEFT TO RIGHT AND PRINTING ON A GIVEN POINT — S120a
- SLIDING FROM RIGHT TO LEFT AND MEASURING PRINTED POSITION BY USING SCANNER — S120b
- SLIDING FROM LEFT TO RIGHT AND MEASURING PRINTED POSITION BY USING SCANNER — S120c

ONE-LINE TRANSFERRING PRINT MEDIA — S130

S140
- SLIDING FROM RIGHT TO LEFT AND PRINTING ON A GIVEN POINT — S140a
- SLIDING FROM LEFT TO RIGHT AND MEASURING PRINTED POSITION BY USING SCANNER — S140b
- SLIDING FROM RIGHT TO LEFT AND MEASURING PRINTED POSITION BY USING SCANNER — S140c

CONVERTING THE MEASURED POSITION INFORMATION INTO COMPENSATED INFORMATION AND STORING — S150

END — S160

# FIG. 3